Europäisches Patentamt

European Patent Office

Office européen des brevets

(19)

(11) Publication number: **0 000 431**
A1

# EUROPEAN PATENT APPLICATION

(12)

(21) Application number: 78300118.3

(22) Date of filing: 05.07.78

(51) Int. Cl.²: **C08J7/00, A01G9/14, B05B5/00**

(30) Priority: 08.07.77 GB 28730/77

(43) Date of publication of application: 24.01.79
Bulletin 79/2

(84) Designated Contracting States: DE FR GB

(71) Applicant: The British Petroleum Company Limited, Britannic House Moor Lane, London EC2Y 9BU (GB)

(72) Inventor: Preedy, John Edward, BP. Research Centre Chertsey Road, Sunbury-on-Thames Middlesex TW16 7LN (GB)

(74) Representative: Harry, John, BP TRADING LIMITED Patents & Licensing Division Chertsey Road, Sunbury-on-Thames Middlesex TW16 7LN (GB)

(54) A method of improving the transmissibility of polymer substrates to visible light by coating with an aqueous emulsion or dispersion containing an ultra violet absorbing scintillator.

(57) This case relates to a method of improving the transmissibility of polymer sheets/films to visible light by coating the sheet or film with an aqueous emulsion of an ultra violet absorbing scintillator. Such sheets and films are useful for example in greenhouse construction thereby assisting the growth of plants.

EP 0 000 431 A1

- 1 -

COATINGS TO CONVERT UV LIGHT TO VISIBLE LIGHT

The present invention relates to a method of coating polymeric sheets or films and glass which enables the substrate to convert any incident light radiation in the UV region to visible light on transmission therethrough thus making it suitable for enhancing growth and as protective coverings for growing plants.

It is known that polymeric materials such as polyvinyl chloride (PVC) or polyethylene may be treated with substances such as scintillators which alter certain of the wave lengths or the light transmitted by the material. By selection of the particular substances used it is possible to produce a material in which the UV component of solar radiation is transferred to certain visible wavelengths. The overall effect is to increase the total visible component of the transmitted light. Films containing such scintillators find particular application in covering or glazing materials for greenhouses or cloches, whereby its use forces growth of plants, e.g. fruit or vegetables placed under it. The polymeric material may be treated by direct compounding of the substance in the polymer composition to produce the sheet or film. It has, however, been found that the wavelength shifting characteristics of the treated polymer is not permanent and decays with time, e.g. over a period of several months. The short life of the active substance necessitates the replacement of the inactive sheet or film with a fresh sheet or film for continuity of effectiveness. This is however a very expensive method even for substances which maintain their activity as long as the plant growing season lasts.

Accordingly the present invention is a method of improving the transmissibility of polymer substrates as hereinafter defined to visible light comprising coating the polymer substrate with an aqueous emulsion

- 2 -

0000431

or dispersion containing an ultraviolet-absorbing scintillator, which is capable of drying in air at ambient temperatures to produce a transparent film coating.

The term "polymer substrates" as used here and used throughout the specification applies to all physical forms of polymeric material including glass, which are transparent or translucent to visible and/or ultraviolet light and is particularly applicable to sheets or films of such polymeric material.

Any of the conventional UV absorbing scintillators may be used, the only limitation being that the scintillator must be readily soluble in the dispersed phase. Scintillators which fluoresce in the region of 0.41 - 0.47 μm are particularly preferred. Examples of scintillators that may be used in the process of the present invention include : 2,5-di-(5-tert-butyl-2-benzoxazolyl)-thiophene (BBOT) ; 1,4-di-(2-phenyloxazolyl) benzene (POPOP) ; dimethyl POPOP which is 1,4-di-/2-(4-methyl-5-phenyloxazolyl)/-benzene ; and BIS-MSB which is 1,4-di-(2-methylstyryl)-benzene. Since the coatings may be reapplied when the scintillator has decayed below a useful level, this method of application is not limited to the use of long life scintillators as in the case where they are incorporated in the bulk polymer film.

The aqueous emulsion or dispersion of the scintillator may be prepared by any of the conventional techniques using well known emulsifying or dispersing agents. The water content of such emulsions or dispersions is suitably at least 30% by the total weight of the emulsion or dispersion (including the weight of the solids) and preferably between 50 and 90% by the total weight. The amount of scintillators employed is usually such as to provide from about 0.01 to 0.5% by weight of the scintillator based on the weight of the polymer substrate.

Suitable polymeric substrates are, for example, polyethylene, ethylene copolymers such as ethylene-vinyl acetate copolymers, polyvinylchloride, polyvinylfluoride, polyesters such as polyethylene terephthalates and polymethylmethacrylates, and glass.

The invention is further illustrated with reference to the accompanying Examples:

Examples 1 to 4 describe scintillators incorporated in wax emulsions. Example 5 is the wax emulsion from Example 1 mixed with 10 percent of a commercial acrylic emulsion to toughen the final film coating. Example 6 shows how the scintillator may be incorporated in a monomer, in this particular case vinyl acetate, prior to polymerisation. Example 7 demonstrates how a scintillator may be combined with a commercially available film forming emulsion. In all cases the coating was applied to an ethylene-vinyl acetate copolymer film. The properties of the coating produced from these formulations are summarised in the Table.

Example 1

| | |
|---|---|
| Paraffin | 90 g |
| Oleic Acid | 15 g |
| Scintillator BBOT | 4.5 g |
| Water | 190 ml |
| Morpholine | 4.95 g |

The paraffin wax, oleic acid and the scintillator were mixed together at 90°C. In a separate vessel the water and morpholine were mixed at 90°C. The aqueous solution was added to the wax solution and the mixture stirred for 45 seconds in a Silverson mixer. The resulting emulsion was rapidly cooled to room temperature.

The emulsion was coated onto a transparent substrate using a Sagola paint spray. For high transparency coatings the emulsions were sprayed at a temperature of 30 to 40°C.

Example 2

| | |
|---|---|
| Paraffin Wax | 90 g |
| Oleic Acid | 15 g |
| Scintillator POPOP | 1 g |
| Water | 210 ml |
| Morpholine | 5 g |

The emulsion was prepared as in Example 1 except that the stirring time was 30 seconds. Coatings were produced by spraying.

Example 3

| | |
|---|---|
| Paraffin Wax | 90 g |
| Oleic Acid | 15 g |
| Scintillator DiMe POPOP | 1 g |
| Water | 190 ml |
| Morpholine | 5 g |

The emulsion was prepared as in Example 1. Coatings were produced by spraying.

Example 4

| | |
|---|---|
| Paraffin Wax | 90 g |
| Oleic Acid | 15 g |
| Scintillator Bis MSB | 2 g |

Water                                                    190 ml

Morpholine                                                 5 g

The emulsion was prepared as in Example 1. Coatings were produced by spraying.

Example 5

Emulsion as Example 1                                    100 ml

Revacryl 239 (Regd. Trade Mark)-Acrylic Emulsion          10 ml

The two emulsions were stirred together using a spatula for about 15 seconds. Coatings were produced by spraying.

Example 6

Vinyl Acetate                                           100 ml

Scintillator BBOT                                          1 g

Water                                                   200 ml

Vulcastab (Regd. Trade Mark)-Nonyl Phenol Phosphite       5 g

Polyvinyl Alcohol                                         3 g

Ammonium Persulphate                                     0.2 g

Sodium Metabisulphite                                    0.3 g

The Vulcastab and the polyvinyl alcohol were dissolved in the water. The scintillator was dissolved in the vinyl acetate. These two solutions were mixed together and shaken to form an emulsion. The mixture was transferred to a heating vessel and the ammonium persulphate and the sodium metabisulphate added. The mixture was stirred and heated to 50°C. The polymerisation of the vinyl acetate occurred at a temperature of 50°C to 60°C over a period of 1 hour. Coatings were produced by spraying.

Example 7

Monitron (Regd. Trade Mark)-Acrylic Emulsion            100 ml

Toluene                                                   10 ml

Scintillator BBOT                                        0.5 g

The scintillator was dissovled in the toluene. The toluene solution was added to the commercial acrylic emulsion and the mixture stirred on a Silverson mixer for 30 seconds at room temperature. Coatings were produced by spraying.

TABLE 1

COATING PROPERTIES

| Formulation Example | Thickness of coating on film μm | Transparency % | Toughness | Adhesion to Substrate | *Half Life of Scintillator Hours in Xenotest |
|---|---|---|---|---|---|
| 1 | 5 | 99 | Moderate | Good | 168 |
| 2 | 5 | 99 | Moderate | Good | 36 |
| 3 | 5 | 99 | Moderate | Good | 48 |
| 4 | 5 | 99 | Moderate | Good | 42 |
| 5 | 5 | 99 | Very Good | Very Good | 120 |
| 6 | 5 | 99 | Good | Moderate | 216 |
| 7 | 10 | 99 | Very Good | Very Good | 90 |

* 1 hour in Xenotest is equivalent to 20 hours outdoors in the winter.

0000431

What we claim is:

1. A method of improving the transmissibility of polymer substrates as hereinbefore defined to visible light comprising coating the polymer substrates with an aqueous emulsion or dispersion containing an ultraviolet-absorbing scintillator which is capable of drying in air at ambient temperatures to produce a transparent film coating.

2. A method according to claim 1 wherein the scintillator is soluble in the dispersed phase.

3. A method according to claim 1 or 2 wherein the scintillator fluoresces in the region of 0.41 to 0.47 μm.

4. A method according to any of the preceding claims wherein the scintillator is selected from 2,5-di-(5-tert-butyl-2-benzoxazolyl)-thiphene; 1,4-di-(2-phenyloxazolyl)benzene; 1,4-di-/2-(4-methyl-5-phenyloxazolyl)/-benzene; and 1,4-di-(2-methylstyryl)-benzene.

5. A method according to any of the preceding claims wherein the water content of the emulsions or dispersions containing the scintillator is at least 30% by weight.

6. A method according to claim 5 wherein the water content of the emulsion or dispersion containing the scintillator is between 50 and 90% by weight.

7. A method according to any one of the preceding claims wherein the amount of scintillator employed is from 0.01 to 0.5% by weight of the polymer substrate.

8. A method according to any of the preceding claims wherein the polymer substrate is selected from polyethylene, ethylene copolymers, polyvinyl chloride, polyvinyl fluoride, polyesters and glass.

9. A method according to claim 8 wherein the ethylene copolymer is an ethylene-vinyl acetate copolymer.

10. A method of improving the transmissibility of polymer substrates according to claim 1 as hereinbefore described with reference to the Examples.

European Patent Office

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| | DE - B - 2 443 164 (HOECHST)<br>* Claims; column 3, lines 41-47 *<br><br>--- | 1-10 | C 08 J 7/00<br>A 01 G 9/14<br>B 05 D 5/00 |
| | US - A - 3 871 901 (D.J.CARLSSON et al.)<br>* Claims *<br><br>--- | 1 | |
| | GB - A - 1 247 066 (MONTECATINI)<br>* Claims *<br><br>--- | 1 | **TECHNICAL FIELDS SEARCHED (Int.Cl.²)** |
| P | FR - A - 2 339 644 (THE BRITISH PETROLEUM CY)<br>* Claims *<br><br>--- | 1-10 | C 08 J 7/00<br>A 01 G 9/14<br>A 01 G 13/02 |
| | FR - A - 2 138 883 (REYNOLDS)<br>* Claims; page 2, lines 1-14 *<br><br>----- | 1 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 13-10-1978 | VAN GOETHEM |

EPO Form 1503.1 06.78